# EUROPÄISCHE PATENTSCHRIFT

(11) **EP 4 322 808 B1**
(45) Veröffentlichungstag und Bekanntmachung des Hinweises auf die Patenterteilung: **20.08.2025**
(21) Anmeldenummer: 22720704.0
(22) Anmeldetag: 05.04.2022
(51) Int. Cl.: A47J 31/46, A47J 31/00, A47J 31/36

(54) **VORRICHTUNG ZUM ZUBEREITEN EINES KAFFEEGETRÄNKS**
DEVICE FOR PREPARING A COFFEE BEVERAGE
DISPOSITIF DE PRÉPARATION D'UNE BOISSON AU CAFÉ

(30) Priorität: 13.04.2021 DE 102021109252
(43) Veröffentlichungstag der Anmeldung: 21.02.2024
(73) Patentinhaber: FRANKE Kaffeemaschinen AG, 4663 Aarburg (CH)
(72) Erfinder: MÜLLER, Simon, 5037 Muhen (CH)
(74) Vertreter: LBP Lemcke, Brommer & Partner Patentanwälte mbB
(86) Internationale Anmeldenummer: PCT/EP2022/058984
(87) Internationale Veröffentlichungsnummer: WO 2022/218759

(56) Entgegenhaltungen:
- EP-B1- 3 078 308
- WO-A1-2015/084005

## Beschreibung

Die vorliegende Erfindung betrifft eine Vorrichtung zum Zubereiten eines Kaffeegetränks mit einer Brüheinheit, der Heißwasser aus einem Heißwasserbereiter unter Druck zuleitbar ist, und einem mit der Brüheinheit über eine Auslassleitung verbundenen Getränkeauslass, über den frisch gebrühtes Kaffeegetränk in ein darunter zu platzierendes Trinkgefäß ausgegeben werden kann.

Eine Kaffeezubereitungsvorrichtung nach dem Oberbegriff des Anspruchs 1 ist aus der WO 2015/084005 A1 bekannt. Eine zusätzliche Pumpe dient dort zum Ausspülen von Kaffeeresten in Anschluss an einen Zubereitungszyklus.

Am Markt befindliche Kaffeemaschinen wie etwa Kaffeevollautomaten oder Espressomaschinen weisen eine Brühkammer auf, in die Pulverkaffee eingefüllt wird, der Pulverkaffee gegebenenfalls verdichtet wird und anschließend unter Druck Heißwasser durchgeleitet wird. Teilweise verfügen derartige Kaffeemaschinen über eine integrierte Reinigungsfunktion, im Rahmen derer Heißwasser oder Spülflüssigkeit durch die Brühkammer geleitet wird. Die Spülflüssigkeit kann hierbei in ein unter dem Getränkeauslass platziertes Gefäß ausgegeben und vom Benutzer manuell weggeschüttet werden. Daneben ist jedoch auch bekannt, die zum Getränkeauslass führende Auslassleitung über ein entsprechendes Umschaltventil direkt mit einem Ablauf oder einem Sammelbehälter zu verbinden, sodass sichergestellt ist, dass Spülflüssigkeit nicht versehentlich in ein Trinkgefäß gelangt. Über ein solches Umschaltventil kann die Auslassleitung auch nach Beendigung eines Brühvorgangs mit dem Ablauf oder dem Sammelbehälter verbunden werden, um ein Nachtropfen von Restkaffee zu verhindern. Ein in der Auslassleitung angeordnetes Umschaltventil (3/2-Wegeventil) besitzt jedoch den Nachteil einer relativ hohen Wärmekapazität und kühlt damit den frisch gebrühten Kaffee auf dem Weg von der Brüheinheit zum Getränkeauslass zusätzlich ab.

Die vorliegende Erfindung hat sich zur Aufgabe gesetzt, eine Vorrichtung zum Zubereiten eines Kaffeegetränks anzugeben, welche ein Abkühlen des frisch gebrühten Kaffees auf dem Weg von der Brüheinheit zum Getränkeauslass vermeidet.

Die Aufgabe wird gelöst durch die Merkmale des Anspruchs 1. Vorteilhafte Ausgestaltungen sind den abhängigen Ansprüchen zu entnehmen.

Bei einer Vorrichtung der eingangs genannten Art ist eine Rücksaugpumpe vorgesehen, die ansaugseitig mit der Auslassleitung fluidleitend verbunden ist und die druckseitig in einen Ablauf oder einen Sammelbehälter mündet, um vor, während oder nach einem Brühvorgang Kaffeegetränk aus der Kaffeeleitung abzusaugen und in den Ablauf oder Sammelbehälter zu leiten. Statt die Auslassleitung über ein Ventil mit einer Drainageleitung zu verbinden, wird somit im Rahmen der vorliegenden Erfindung Flüssigkeit aus der Auslassleitung durch Unterdruck abgesaugt und in die Drainageleitung geleitet.

Darüber hinaus ist vorgesehen, dass die Vorrichtung nach einer längeren Standzeit vor der Zubereitung eines Kaffeegetränks mit Heißwasser unter Einsatz der erfindungsgemäßen Rücksaugpumpe vorgewärmt wird. Dies kann entweder erfolgen, indem vor einem Befüllen der Brüheinheit mit Kaffeepulver kurzzeitig ein Heißwasserstrom durch Brüheinheit und Auslassleitung geleitet wird. Alternativ kann die Brüheinheit mit einer eigenen Heizung versehen sein und muss daher nicht vorgewärmt werden. In diesem Fall kann ein Vorwärmen lediglich der Auslassleitung dadurch erfolgen, dass über ein zusätzliches Ventil ein Heißwasserstrom in die Auslassleitung geleitet wird. In beiden Fällen wird erfindungsgemäß die Rücksaugpumpe über die zugehörige Steuerung während einer solchen Vorwärmphase aktiviert, um das zum Vorwärmen verwendete Heißwasser abzusaugen, sodass dieses nicht über den Getränkeauslass in ein darunter platziertes Trinkgefäß ausgegeben wird. In gleicher Weise kann die Rücksaugpumpe im Rahmen eines Reinigungsvorgangs eingesetzt werden, um Reinigungsflüssigkeit abzusaugen.

Die Zuleitung von Heißwasser von dem Heißwasserbereiter zu der Brüheinheit über eine Heißwasserzuleitung erfolgt zweckmäßigerweise mittels einer Wasserpumpe, die Wasser von einem Wasseranschluss oder aus einem Wassertank unter Druck in Richtung der Brüheinheit fördert. Die Wasserpumpe kann in der vom Heißwasserbereiter zur Brüheinheit führenden Heißwasserzuleitung vorgesehen sein. Zweckmäßigerweise befindet sich die Heißwasserpumpe aber zulaufseitig des Heißwasserbereiters in dessen Kaltwasserzuleitung und fördert somit kaltes Wasser zu dem Heißwasserbereiter, welcher wiederum Heißwasser unter dem Druck der Pumpe an die Brüheinheit weitergibt. Der Heißwasserbereiter kann in an sich bekannter Weise als Heißwasserboiler oder als Durchlauferhitzer ausgebildet werden.

Bei einer bevorzugten Ausführungsform weist die Vorrichtung eine programmierbare Steuerung zur Ansteuerung der Rücksaugpumpe auf. Mit einer solchen Steuerung lassen sich eine Vielzahl von Funktionen realisieren. Bevorzugt kann hierbei vorgesehen sein, dass die Rücksaugpumpe von der Steuerung so angesteuert wird, dass im Anschluss an einen Brühvorgang in der Auslassleitung verbliebene Reste des Kaffeegetränks abgesaugt werden. Hierdurch wird ein Nachtropfen von Kaffee aus dem Getränkeauslass verhindert. Außerdem wird so sichergestellt, dass sich bei der nächsten Produktzubereitung kein zwischenzeitlich abgekühltes Kaffeegetränk in der Kaffeeleitung befindet, sodass nur frisch gebrühtes Kaffeegetränk zum Getränkeauslass ausgegeben wird.

Ein Absaugen der Flüssigkeitsreste aus der Auslassleitung kann nach jedem einzelnen Zubereitungsvorgang erfolgen. Alternativ ist es auch möglich, erst nach einer gewissen Stillstandszeit die Auslassleitung leerzusaugen. Somit können direkt hintereinander mehrere Kaffeegetränke ohne Absaugen ausgegeben werden. Erst wenn eine Zeit lang keine weiteren Getränke zubereitet werden, wird die Auslassleitung leergesaugt. Ebenso ist es möglich, die Rücksaugpumpe vor Beginn einer Kaffeezubereitung kurzzeitig zu aktivieren und so sicherzustellen, dass sich keinerlei Flüssigkeitsreste in der Auslassleitung befinden.

Daneben kann mithilfe der Rücksaugpumpe jedoch auch eine gezielte Geschmacksveränderung eines zubereiteten Kaffeegetränks erzielt werden. Hierzu ist die Steuerung ausgebildet, die Rücksaugpumpe so anzusteuern, dass während des Brühvorgangs eines Kaffeegetränks zeitgesteuert Teile des frisch gebrühten Kaffeegetränks gezielt abgesaugt ("wegdrainagiert") und somit nicht über den Getränkeauslass in das Trinkgefäß des Benutzers ausgegeben werden. Dem liegt die Erkenntnis zugrunde, dass über die Extraktionszeit hinweg unterschiedliche Aromaträger aus dem Kaffeepulver gelöst werden. So ist der erste Teil (zum Beispiel 0 bis 10 Sekunden) eines Kaffees eher säurebetont, während der letzte Teil eher bitter schmeckt. Durch die Rücksaugpumpe können somit während eines Zubereitungsvorgangs unerwünschte Extraktionszeitperioden wegdrainagiert werden. Zum Beispiel kann die Startphase wegdrainagiert werden, um so weniger Säure im Endprodukt zu erhalten.

Eine besonders vorteilhafte Weiterbildung ergibt sich, wenn die Steuerung so ausgebildet ist, dass durch Ansteuerung der Rücksaugpumpe deren Fördergeschwindigkeit während des Betriebs variiert wird, um die Menge des pro Zeiteinheit über dem Auslass ausgegebenen Kaffeegetränks während des Brühvorgangs zu variieren. Somit ist es möglich, während bestimmten Extraktionszeitperioden die Getränkeanteile nicht vollständig wegzudrainagieren, sondern lediglich teilweise, indem die Fördergeschwindigkeit der Ansaugpumpe vermindert wird. So kann zum Beispiel 40 % des Kaffeegetränks während der Zeitperiode 2 bis 5 Sekunden wegdrainagiert werden, indem die Pumpe in diesem Zeitintervall mit reduzierter Fördergeschwindigkeit aktiviert wird. Durch Vorgabe der Aktivierungszeiten und der Förderleistung können unterschiedliche geschmackliche Ausprägungen des fertigen Kaffeegetränks realisiert werden.

Bei einer Weiterbildung der Erfindung kann stromaufwärts der Brüheinheit in einer Heißwasserzuleitung ein Brühventil vorgesehen sein, welches zum Starten des Brühvorgangs geöffnet und nach Beendigung des Brühvorgangs geschlossen wird. Die Steuerung kann hierbei ausgebildet sein, die Rücksaugpumpe vor, zusammen mit oder nach Schließen des Brühventils zu aktivieren. Dementsprechend erfolgt ein Leersaugen der Auslassleitung bereits kurz vor Beendigung eines Brühvorgangs, zusammen mit dessen Beendigung, oder erst nachdem der Brühvorgang beendet und das Brühventil geschlossen wurde.

Bei einer bevorzugten Weiterbildung ist zwischen der Brüheinheit und dem Getränkeauslass in der Auslassleitung ein Gegendruckventil angeordnet. Über dieses kann der Druck in der Brüheinheit oder eine Durchflussrate durch die Brüheinheit gezielt geregelt werden. Bevorzugt ist hierbei vorgesehen, dass die Rücksaugpumpe stromabwärts des Gegendruckventils von der Auslassleitung abzweigt. Einerseits liegt somit an der Rücksaugpumpe während eines Brühvorgangs nicht der Brühdruck der Brüheinheit an. Andererseits kann die Rücksaugleitung bis zum Getränkeauslass ohne den Widerstand des Gegendruckventils leergesaugt werden.

Bei einer alternativen Ausführungsform kann die Rücksaugpumpe statt direkt mit der Auslassleitung auch stromaufwärts der Brüheinheit mit der Heißwasserzuleitung oder einem mit der Heißwasserzuleitung verbindbaren Abgang des Brühventils verbunden sein. Das Kaffeegetränk kann in diesem Falle bei Betrieb der Rücksaugpumpe durch die Brüheinheit hindurch zurückgesaugt werden. Somit ist die Rücksaugpumpe über die Brüheinheit mit der Auslassleitung fluidleitend verbunden.

Bei einer bevorzugten Ausgestaltung ist die Rücksaugpumpe als Peristaltikpumpe ausgeführt. Eine solche erweist sich als besonders robust gegenüber heißen und gegebenenfalls korrosiven Flüssigkeiten (säurehaltigem Kaffee) sowie gegenüber Ablagerungen, die sich mit der Zeit bilden können.

Weitere Vorteile und Ausgestaltungen der vorliegenden Erfindung ergeben sich aus der nachfolgenden Beschreibung von Ausführungsbeispielen anhand der Figuren. Es zeigt:
- Figur 1: ein Flussschema einer Kaffeezubereitungsvorrichtung mit einer mit der Auslassleitung verbundenen Rücksaugpumpe in einem ersten Ausführungsbeispiel,
- Figur 2: ein zweites Ausführungsbeispiel mit zusätzlichem in der Auslassleitung angeordneten Gegendruckventil,
- Figur 3: ein alternatives Ausführungsbeispiel mit in der Ansaugleitung angeordnetem Gegendruckventil,
- Figur 4: ein Ausführungsbeispiel einer Kaffeezubereitungsvorrichtung mit über einem Brühventil stromaufwärts der Brüheinheit angeschlossener Rücksaugpumpe,
- Figur 5: ein alternatives Ausführungsbeispiel mit zwischen Brühgruppe und Brühventil angeschlossener Rücksaugpumpe,
- Figur 6: ein weiteres alternatives Ausführungsbeispiel mit vor dem Brühventil angeschlossener Rücksaugpumpe und
- Figur 7: ein Ausführungsbeispiel mit Heizung in der Brüheinheit und Ventil zum Vorwärmen der Auslassleitung.

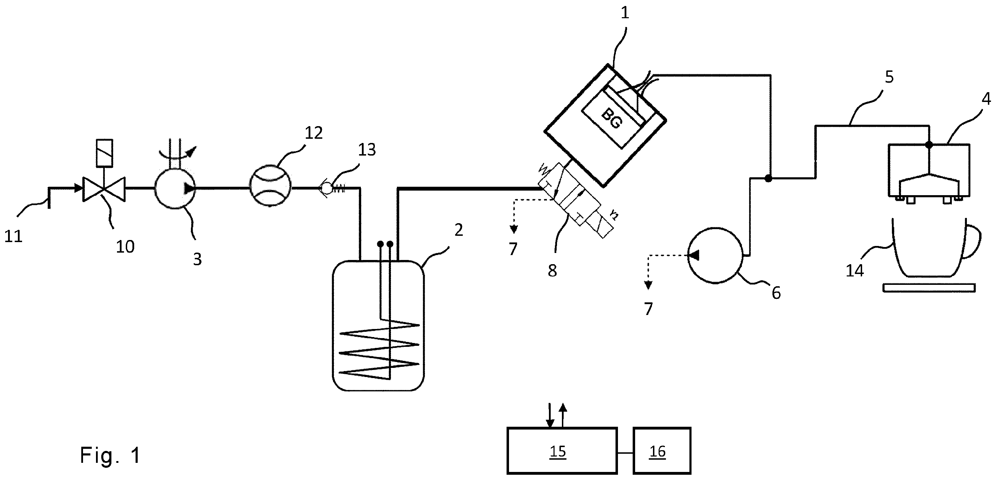

In Figur 1 ist in einem sogenannten Wasserlaufschema der Aufbau einer Vorrichtung zur Zubereitung von Kaffeegetränken gezeigt, die beispielsweise in einem Kaffeevollautomaten oder einer Espressomaschine verwendet werden kann. Die Zubereitungsvorrichtung umfasst eine Brüheinheit 1, einen Heißwasserboiler 2, eine zulaufseitige Wasserpumpe 3 und einen Getränkeauslauf 4 zur Ausgabe frisch gebrühter Kaffeegetränke, der über eine Auslassleitung 5 mit der Brüheinheit 1 verbunden ist. Mit der Auslassleitung 5 ist außerdem eine Rücksaugpumpe 6 verbunden, die druckseitig in einen Ablauf 7 oder einen Sammelbehälter mündet. In einer Heißwasserzulaufleitung zwischen Heißwasserboiler 2 und Brüheinheit 1 befindet sich ein Brühventil 8, welches als 3/2-Wegeventil ausgeführt ist. Dieses verbindet wechselweise die vom Heißwasserboiler 2 kommende Heißwasserleitung mit der Brüheinheit 1 oder die Brüheinheit 1 mit dem Ablauf 7 oder einem entsprechenden Sammelbehälter.

In Flussrichtung vor der Wasserpumpe 3 befindet sich ein Hauptwasserventil 10, über welches die Zubereitungsvorrichtung an eine Trinkwasserzuleitung 11 angeschlossen ist. Druckseitig ist die Pumpe 3 über einen Durchflusssensor 12, häufig auch als Flowmeter bezeichnet, und ein Rückschlagventil 13 mit dem Zulauf des Heißwasserboilers 2 verbunden. Durch Druckbeaufschlagung des Heißwasserboilers 2 mittels der Wasserpumpe 3 wird Heißwasser aus dem HEißwasserboiler 2 der Brüheinheit 1 zugeführt. Eine Steuerung 15 mit Benutzerschnittstelle 16 steuert die Funktion der Zubereitungsvorrichtung und deren Komponenten. Die Steuerung kann hierbei durch einen entsprechend programmierten Mikroprozessor realisiert werden, mit welchem auch weitere Steuer- und Regelvorgänge in einem Kaffeevollautomat implementiert sein können.

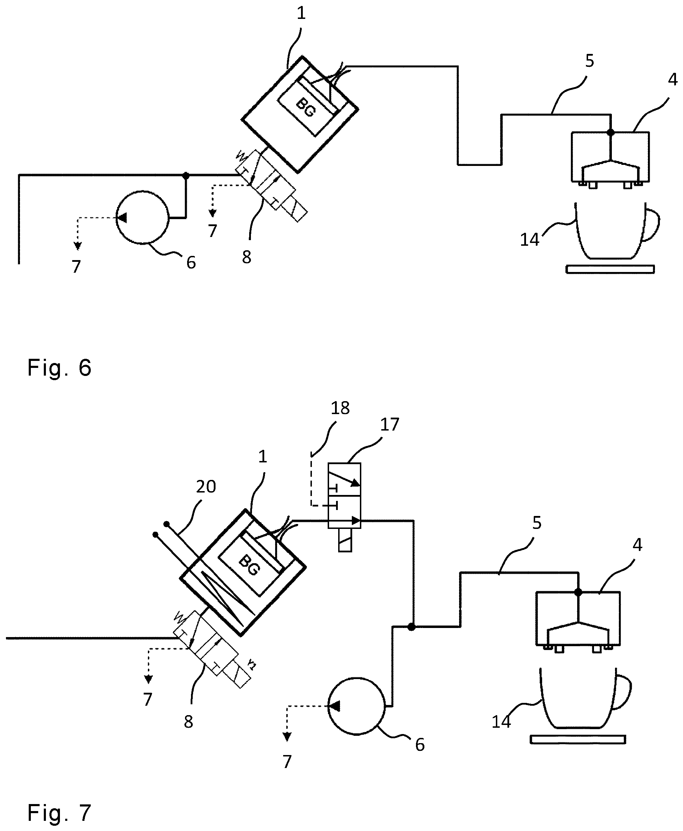

Die Brüheinheit 1 umfasst in an sich bekannter Weise eine Brühkammer, in die portioniertes, frisch gemahlenes Kaffeepulver eingefüllt wird, sowie vorzugsweise eine Heizung (siehe Fig. 7, 20), mit der die Brüheinheit vorgewärmt und warmgehalten werden kann. Eine Brüheinheit, die im Rahmen der vorliegenden Erfindung eingesetzt werden kann, ist beispielsweise in der EP 2561778 A1 beschrieben, auf die zur Vermeidung unnötiger Wiederholungen hiermit vollinhaltlich Bezug genommen wird.

Die Brüheinheit ist so ausgestaltet, dass sie geöffnet werden kann, um eine portionierte Menge Kaffeepulver einzufüllen, welches zuvor in einem Mahlwerk des Kaffeevollautomaten portionsweise frisch gemahlen wurde. Außerdem kann bei geöffneter Brüheinheit nach dem Brühvorgang der verbleibende Kaffeesatz in einen Tresterbehälter ausgeworfen werden. Die Brüheinheit weist außerdem einen beweglichen Kolben auf (nicht dargestellt), der das eingefüllte Kaffeepulver gegen ein in der Brühkammer befindliches Brühsieb verdichtet. Nach Zurückfahren des Kolbens kann das so verdichtete Kaffeepulver von dem unter Druck stehenden Brühwasser durchströmt werden.

Aus der Brüheinheit 1 fließt das frisch gebrühte Kaffeegetränk über die Auslassleitung 5 zum Getränkeauslass 4 und von dort in ein darunter platziertes Trinkgefäß 14. Nach Beendigung des Brühvorgangs kann über die Steuerung 15 die Rücksaugpumpe 6 aktiviert werden, welche in der Auslassleitung 5 verbliebenes Kaffeegetränk absaugt und in den Ablauf 7 oder einen gegebenenfalls an die Pumpe angeschlossenen Sammelbehälter einleitet. Somit wird ein Nachtropfen von Kaffee aus dem Getränkeauslass 4 verhindert. Die Restmenge an in der Auslassleitung noch befindlichem Kaffeegetränk kann somit vollständig und zuverlässig entleert werden. Dies hat folgende Vorteile: Das Startverhalten (Auslaufverhalten) des nächsten Produkts erfolgt ohne Tropfen oder Spritzen, da das Gas-/Kaffeegemisch komplett abgezogen werden kann. Die Restmenge des Kaffees kühlt das nächste Produkt nicht zusätzlich ab. Außerdem erfolgt keine geschmackliche Beeinträchtigung durch die Restmenge des Kaffeegetränks für das nächste Produkt.

Darüber hinaus ist es möglich, über die Rücksaugpumpe 6 gezielt Geschmacksveränderungen am ausgegebenen Getränk zu erreichen, indem gewisse Extraktionszeitperioden drainagiert, das heißt in den Ablauf 7 abgesaugt werden. Zum Beispiel kann die Startphase wegdrainagiert werden, um so weniger Säure zu erhalten. Weiter ist es mit der Pumpe möglich, die Menge des Kaffees, welcher während bestimmter Extraktionszeitperioden in das Trinkgefäß ausgegeben wird, zu regulieren. So kann zum Beispiel 40 % des Kaffees während der Zeitperiode 2 bis 5 Sekunden wegdrainagiert werden, indem die Fördergeschwindigkeit der Rücksaugpumpe 6 entsprechend angepasst wird.

Die Funktion der Kaffeezubereitungsvorrichtung wird durch die Steuerungseinheit 15 bestimmt. Diese liest die verschiedenen Sensoren wie etwa den Durchflussmesser 12 aus und steuert die Ventile 8 und 10 sowie die Pumpen 3 und 6 sowie die Brüheinheit 1 an. Selbstverständlich können weitere hier der Übersichtlichkeit halber nicht dargestellter Sensoren für Druck, Temperatur, Flow etc. vorgesehen sein, deren Messwerte die Steuerungseinheit 15 ausliest.

Die Steuerungseinheit 15 steuert außerdem einen automatischen Reinigungsvorgang, bei dem Spülflüssigkeit durch die Brüheinheit 1 und die Auslassleitung 5 gefördert wird und aktiviert hierbei insbesondere Rücksaugpumpe 6, um die Spülflüssigkeit aus der Auslassleitung 5 abgesaugt und in den Ablauf 7 geleitet wird. Ebenso steuert die Steuerungseinheit 15 einen Aufwärmvorgang, bei dem Heißwasser durch die Brüheinheit 1 und die Auslassleitung 5 gefördert wird, um diese vorzuwärmen. Auch in diesem Fall wird die Rücksaugpumpe 6 aktiviert, um das Spülwasser aus der Auslassleitung in den Ablauf 7 abzusaugen.

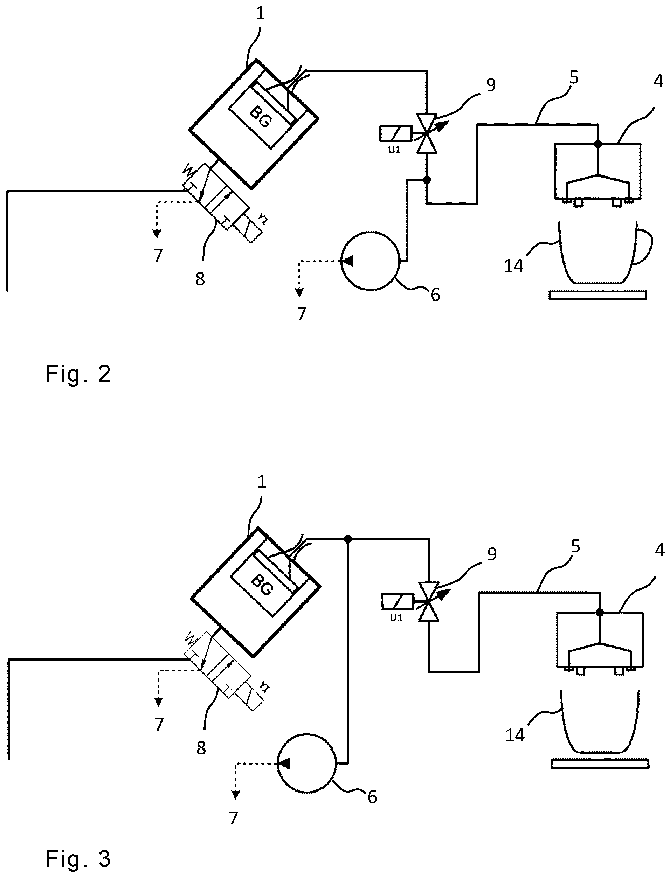

In den folgenden Ausführungsbeispielen werden Varianten und Abwandlungen der in Figur 1 gezeigten Kaffeezubereitungsvorrichtung erläutert. Hierbei ist jeweils nur der Fluidweg ab dem Heißwasserboiler 2 dargestellt. In dem in Figur 2 dargestellten Ausführungsbeispiel befindet sich in der Auslassleitung 5 zusätzlich ein regelbares Gegendruckventil 9. Dieses ist vorzugsweise als über einen Motor angesteuertes Nadelventil realisiert und bewirkt in der Auslassleitung einen Strömungswiderstand, sodass der an der Brüheinheit 1 anliegende Wasserdruck nicht ausschließlich über dem in der Brühkammer aufgenommenen Kaffeekuchen abfällt, sondern in Abhängigkeit des Öffnungszustands des Gegendruckventils 9 an dem Gegendruckventil 9 abfällt. Mithilfe der Steuerung 15 kann das Gegendruckventil 9 so reguliert werden, dass eine bestimmte Durchflussrate oder eine bestimmte Gesamtdurchflusszeit einer vorgegebener Menge Brühwasser oder ein bestimmter Druck in der Brüheinheit 1 erreicht wird. Die Rücksaugpumpe 6 ist zweckmäßigerweise stromabwärts des Gegendruckventils 9 mit der Auslassleitung 5 verbunden, sodass diese unabhängig vom Öffnungszustand des Gegendruckventils 9 nach Beendigung eines Brühvorgangs oder auch während eines Brühvorgangs frisch gebrühtes Kaffeegetränk aus der Auslassleitung 5 absaugen kann.

In einer alternativen, in Figur 3 gezeigten Ausführungsform ist die Rücksaugpumpe 6 stromaufwärts des Gegendruckventils 9 mit der Rücksaugleitung 5 verbunden, sodass frisch gebrühtes Kaffeegetränk direkt hinter der Brüheinheit 1 abgesaugt werden kann. Zum Entleeren der Auslassleitung 5 kann zweckmäßigerweise das Gegendruckventil 9 nach Beendigung des Brühvorgangs vollständig geöffnet werden, sodass das Kaffeegetränk ohne zusätzlichen Widerstand und somit zuverlässig und schnell von der Rücksaugpumpe 6 abgesaugt werden kann.

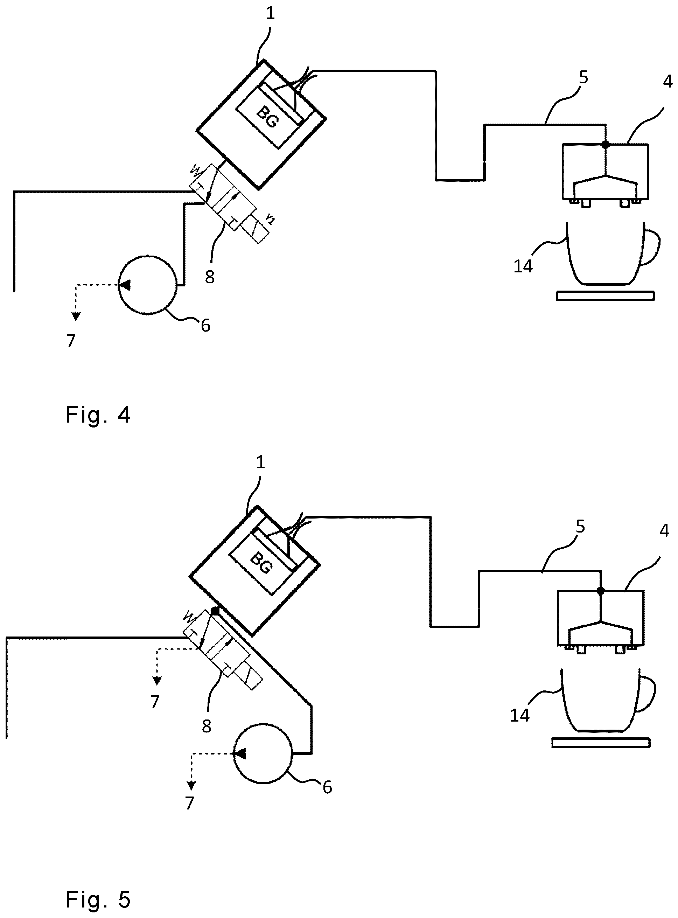

Bei der in Figur 4 gezeigten Ausführungsform ist die Rücksaugpumpe 6 mit dem dritten Anschluss des Brühventils 8 (3/2-Wegeventil) verbunden, dergestalt, dass bei geschlossenem Brühventil die Brüheinheit 1 über die Rücksaugpumpe 6 in Richtung des Ablaufs 7 entleert werden kann. Die Auslassleitung 5 kann hierbei durch die Brüheinheit 1 hindurch leergesaugt werden. Hierzu wird zweckmäßigerweise der Brühkolben der Brüheinheit 1 zurückgefahren, und das in der Brühkammer aufgenommene Kaffeepulver in einen Tresterbehälter (nicht gezeigt) ausgeworfen.

Alternativ kann, wie in Figur 5 gezeigt, die Rücksaugpumpe 6 auch in der Verbindungsleitung zwischen dem Brühventil 8 und der Brüheinheit 1 angeschlossen werden. Auch in diesem Falle kann bei geschlossenem Brühventil das in der Brüheinheit 1 verbliebene Fluid über die Rücksaugpumpe 6 abgesaugt und in den Ablauf 7 geleitet werden.

Schließlich ist in Figur 6 eine Ausführungsform gezeigt, bei der die Rücksaugpumpe 6 stromaufwärts des Brühventils 8 angeschlossen ist. In diesem Falle kann nach Beendigung eines Brühvorgangs zunächst das Brühventil geschlossen und in der Zuleitung enthaltenes Fluid über das Brühventil 8 in den Ablauf abgelassen werden. Anschließend kann das Brühventil wieder geöffnet werden, sodass mittels der Rücksaugpumpe 6 in der Brüheinheit 1 und der Auslassleitung 5 verbliebenes Kaffeegetränk rückgesaugt und in den Ablass 7 ausgegeben werden kann.

Wie bereits erläutert ist die Rücksaugpumpe 6 vorzugsweise als Peristaltikpumpe ausgestaltet, sodass die beweglichen Teile der Pumpe nicht mit dem heißen und gegebenenfalls korrosiven Kaffeegetränk in Kontakt kommen. Alternativ können jedoch auch andere, entsprechend robuste Pumpentypen zum Einsatz kommen.

In Figur 7 ist ein Ausführungsbeispiel gezeigt, welches im Wesentlichen dem in Figur 1 gezeigten entspricht. Zusätzlich ist eine elektrische Heizung 20 der Brüheinheit 1 gezeigt, mit der diese vorgewärmt werden kann. Außerdem befindet sich in der Auslassleitung hinter der Brüheinheit 1 ein Umschaltventil 17. Dieses verbindet im Normalbetrieb den Ausgang der Brüheinheit 1 mit der Auslassleitung 5. Zum Vorwärmen der Auslassleitung nach einer längeren Standzeit kann das Ventil 17 von der Steuerung 15 umgeschaltet werden, um einen Heißwasserstrom durch die Auslassleitung 5 zu leiten. Der Eingang 18 des Umschaltventils 17 ist hierzu mit einem Heißwasserbereiter, etwa dem Heißwasserboiler 2 aus Figur 1 verbunden. Während dieses Aufwärmvorgangs wird die Rücksaugpumpe 6 über die Steuerung 15 aktiviert, um das zum Vorwärmen verwendete Heißwasser abzusaugen, sodass dieses nicht über den Getränkeauslass 4 in ein darunter platziertes Trinkgefäß 14 ausgegeben wird. Durch das Vorwärmen der Auslassleitung 5 und der Brüheinheit 1 wird vermieden, dass ein frisch gebrühtes Kaffeegetränk noch in der Kaffeemaschine abkühlt, bevor es das Trinkgefäß 14 erreicht. Durch den Betrieb der Rücksaugpumpe 6 beim Vorwärmen wird vermieden, dass die Auslassleitung 5 zu Beginn eines Kaffeebezugs mit Wasser gefüllt ist, welches dann bei einem Kaffeebezug in das Trinkgefäß ausgegeben würde und das Kaffeegetränk verwässert.

## Patentansprüche

1. Vorrichtung zum Zubereiten eines Kaffeegetränks mit einer Brüheinheit (1), der Heißwasser aus einem Heißwasserbereiter (2) unter Druck zuleitbar ist, und einem mit der Brüheinheit (1) über eine Auslassleitung (5) verbundenen Getränkeauslass (4), über den frisch gebrühtes Kaffeegetränk in ein darunter zu platzierendes Trinkgefäß (14) ausgegeben werden kann, und mit
einer Rücksaugpumpe (6), die ansaugseitig mit der Auslassleitung (5) fluidleitend verbunden ist und die druckseitig in einen Ablauf (7) oder einen Sammelbehälter mündet, um vor, während oder nach einem Brühvorgang Kaffeegetränk aus der Auslassleitung (5) abzusaugen und in den Ablauf (7) oder Sammelbehälter zu leiten, sowie einer Steuerung (15) zur Ansteuerung der Rücksaugpumpe (6),
**dadurch gekennzeichnet, dass**
die Steuerung (15) ausgebildet ist, während eines Vorwärmvorgangs Heißwasser in die Auslassleitung (5) oder in Brüheinheit (1) und Auslassleitung (5) einzuleiten und die Rücksaugpumpe (6) während des Vorwärmvorgangs zu aktivieren.

2. Vorrichtung nach Anspruch 1, bei der die Steuerung (15) ausgebildet ist, die Rücksaugpumpe (6) so anzusteuern, dass im Anschluss an einen Brühvorgang in der Auslassleitung (5) verbliebene Reste des Kaffeegetränks abgesaugt werden.

3. Vorrichtung nach Anspruch 1 oder 2, bei der die Steuerung (15) ausgebildet ist, die Rücksaugpumpe (6) so anzusteuern, dass während des Brühvorgangs eines Kaffeegetränks zeitgesteuert Teile des frisch gebrühten Kaffeegetränks gezielt wegdrainagiert werden.

4. Vorrichtung nach Anspruch 3, bei der die Steuerung (15) ausgebildet ist, durch Ansteuerung der Rücksaugpumpe (6) deren Fördergeschwindigkeit während des Betriebs zu variieren, um die Menge des pro Zeiteinheit über den Auslass (4) ausgegebenen Kaffeegetränks während des Brühvorgangs zu variieren.

5. Vorrichtung nach einem der Ansprüche 1 bis 4 mit einem stromaufwärts der Brüheinheit (1) in einer Heißwasserzuleitung angeordnetes Brühventil (8), welches zum Starten des Brühvorgangs geöffnet und nach Beendigung des Brühvorgangs geschlossen wird, wobei die Steuerung (15) ausgebildet ist, die Rücksaugpumpe (6) vor, zusammen mit oder nach Schließen des Brühventils (8) zu aktivieren.

6. Vorrichtung nach einem der vorangehenden Ansprüche mit einem zwischen Brüheinheit (1) und Getränkeauslass (4) in der Auslassleitung (5) angeordneten Gegendruckventil (9), wobei die Ansaugleitung der Rücksaugpumpe (6) bevorzugt stromabwärts des Gegendruckventils (9) von der Auslassleitung (5) abzweigt.

7. Vorrichtung nach einem der vorangehenden Ansprüche, bei der die Ansaugleitung der Rücksaugpumpe (6) stromaufwärts der Brüheinheit (1) mit der Heißwasserzuleitung verbunden ist, derart, dass Kaffeegetränk bei Betrieb der Rücksaugpumpe (6) durch die Brüheinheit (1) zurückgesaugt wird.

8. Vorrichtung nach Anspruch 5 oder 6, wenn Anspruch 6 vom Anspruch 5 abhängig ist, bei der die Ansaugleitung der Rücksaugpumpe (6) mit einem mit der Heißwasserzuleitung verbindbaren Abgang des Brühventils (8) verbunden ist, derart, dass Kaffeegetränk bei Betrieb der Rücksaugpumpe (6) durch die Brüheinheit (1) zurückgesaugt wird.

9. Vorrichtung nach einem der vorangehenden Ansprüche, bei der die Rücksaugpumpe (6) eine Peristaltikpumpe ist.

10. Vorrichtung nach einem der vorangehenden Ansprüche, bei der die Steuerung (15) ausgebildet ist, zur Durchführung des Vorwärmvorgangs vor einem Befüllen der Brüheinheit (1) mit Kaffeepulver kurzzeitig ein Heißwasserstrom durch Brüheinheit (1) und Auslassleitung (5) zu aktivieren.

11. Vorrichtung nach einem der vorangehenden Ansprüche, bei der die Brüheinheit (1) mit einer Heizung (20) versehen ist und die Steuerung (15) ausgebildet ist, zur Durchführung des Vorwärmvorgangs über ein Ventil (17) einen Heißwasserstrom durch die Auslassleitung (5) zu aktivieren.

## Claims

1. A device for preparing a coffee beverage, the device comprising a brewing unit (1) to which hot water from a hot water heater (2) is suppliable under pressure, and a beverage outlet (4) which is connected to the brewing unit (1) via an outlet line (5) and via which freshly brewed coffee beverage is dispensable into a drinking vessel (14) to be placed underneath, and comprising
a return pump (6) which is connected on an intake side in a fluid-conducting manner to the outlet line (5) and which opens on a delivery side into a drain (7) or a collecting container in order to suction coffee beverage out of the outlet line (5) before, during or after a brewing operation and to conduct coffee beverage into the drain (7) or collecting container, and a controller (15) for activating the return pump (6),
**characterized in that**
the controller (15) is configured to introduce hot water into the outlet line (5) or into the brewing unit (1) and outlet line (5) during a pre-heating operation and to activate the return pump (6) during the pre-heating operation.

2. The device according to claim 1, wherein the controller (15) is configured to activate the return pump (6) such that residues of the coffee beverage remaining in the outlet line (5) following a brewing operation are suctioned away.

3. The device according to claim 1 or 2, wherein the controller (15) is configured to activate the return pump (6) such that, during the brewing operation of a coffee beverage, parts of the freshly brewed coffee beverage are drained away in a time-controlled and targeted manner.

4. The device according to claim 3, wherein the controller (15) is configured, by activating the return pump (6), to vary the pumping speed thereof during operation in order to vary the quantity of the coffee beverage dispensed per unit of time via the outlet (4) during the brewing operation.

5. The device according to any one of claims 1 to 4, comprising a brewing valve (8) which is arranged upstream of the brewing unit (1) in a hot water supply line and which is opened for starting the brewing operation and closed after the brewing operation has been terminated, wherein the controller (15) is configured to activate the return pump (6) before, together with or after the closure of the brewing valve (8).

6. The device according to any one of the preceding claims, comprising a back-pressure valve (9) arranged between the brewing unit (1) and the beverage outlet (4) in the outlet line (5), wherein the suction line of the return pump (6) preferably branches off from the outlet line (5) downstream of the back-pressure valve (9).

7. The device according to any one of the preceding claims, wherein the suction line of the return pump (6) is connected upstream of the brewing unit (1) to the hot water supply line such that coffee beverage is suctioned back through the brewing unit (1) during operation of the return pump (6).

8. The device according to claim 5 or 6, if claim 6 is dependent on claim 5, wherein the suction line of the return pump (6) is connected to an outlet of the brewing valve (8) which is connectable to the hot water supply line such that coffee beverage is suctioned back through the brewing unit (1) during operation of the return pump (6).

9. The device according to any one of the preceding claims, wherein the return pump (6) is a peristaltic pump.

10. The device according to any one of the preceding claims, wherein for carrying out the pre-heating operation, the controller (15) is configured to briefly activate a hot water flow through the brewing unit (1) and the outlet line (5) before the brewing unit (1) is filled with ground coffee.

11. The device according to any one of the preceding claims, wherein the brewing unit (1) is provided with a heater (20) and the controller (15) is configured, for carrying out the pre-heating operation, to activate a hot water flow through the outlet line (5) via a valve (17).

## Revendications

1. Dispositif de préparation d'une boisson à base de café avec une unité d'infusion (1), à laquelle peut être fournie de l'eau chaude à partir d'un chauffe-eau (2) sous pression, et une sortie de boisson (4) reliée à l'unité d'infusion (1) par le biais d'une conduite de sortie (5), sortie de boisson par le biais de laquelle une boisson à base de café fraichement infusée peut être distribuée dans un récipient à boire (14) à placer dessous, et avec
une pompe de recirculation (6) qui est reliée côté aspiration à la conduite de sortie (5) de manière à conduire le fluide et qui débouche côté pression dans une évacuation (7) ou un récipient collecteur afin d'aspirer avant, pendant ou après une opération d'infusion la boisson à base de café de la conduite de sortie (5) et de la mener dans l'évacuation (7) ou le récipient collecteur, ainsi qu'un dispositif de commande (15) pour la commande de la pompe de recirculation (6),
**caractérisé en ce que**
le dispositif de commande (15) est conçu afin d'introduire de l'eau chaude dans la conduite de sortie (5) ou dans l'unité d'infusion (1) et la conduite de sortie (5) pendant une opération de préchauffage et d'activer la pompe de recirculation (6) pendant l'opération de préchauffage.

2. Dispositif selon la revendication 1, dans lequel le dispositif de commande (15) est conçu afin de commander la pompe de recirculation (6) de sorte que des résidus de la boisson à base de café restés dans la conduite de sortie (5) soient aspirés à la suite d'une opération de d'infusion.

3. Dispositif selon la revendication 1 ou 2, dans lequel le dispositif de commande (15) est conçu afin de commander la pompe de recirculation (6) de sorte que, pendant l'opération d'infusion d'une boisson à base de café, des parties de la boisson à base de café fraichement infusées soient drainées de manière ciblée et programmée.

4. Dispositif selon la revendication 3, dans lequel le dispositif de commande (15) est conçu, en commandant la pompe de recirculation (6), afin de faire varier sa vitesse de transport pendant le fonctionnement afin de faire varier la quantité de la boisson à base de café distribuée par unité de temps par le biais de la sortie (4) pendant l'opération d'infusion.

5. Dispositif selon l'une quelconque des revendications 1 à 4 avec une soupape d'infusion (8) agencée en amont de l'unité d'infusion (1) dans une conduite d'amenée d'eau chaude, soupape qui est ouverte pour le démarrage de l'opération d'infusion et fermée à la fin de l'opération d'infusion, dans lequel le dispositif de commande (15) est conçu afin d'activer la pompe de recirculation (6) avant, simultanément ou après la fermeture de la soupape d'infusion (8).

6. Dispositif selon l'une quelconque des revendications précédentes, avec une soupape de contre-pression (9) agencée entre l'unité d'infusion (1) et la sortie de boisson (4) dans la conduite de sortie (5), dans lequel la conduite d'aspiration de la pompe de recirculation (6) bifurque de la conduite de sortie (5) de préférence en aval de la soupape de contre-pression (9).

7. Dispositif selon l'une quelconque des revendications précédentes, dans lequel la conduite d'aspiration de la pompe de recirculation (6) est reliée en amont de l'unité d'infusion (1) à la conduite d'amenée d'eau chaude de manière à ce que la boisson à base de café soit de nouveau aspirée par l'unité d'infusion (1) lors du fonctionnement de la pompe de recirculation (6).

8. Dispositif selon la revendication 5 ou 6, lorsque la revendication 6 dépend de la revendication 5, dans lequel la conduite d'aspiration de la pompe de recirculation (6) est reliée à une évacuation de la soupape d'infusion (8) pouvant être reliée à la conduite d'amenée d'eau chaude de manière à ce que la boisson à base de café soit de nouveau aspirée par l'unité d'infusion (1) lors du fonctionnement de la pompe de recirculation (6).

9. Dispositif selon l'une quelconque des revendications précédentes, dans lequel la pompe de recirculation (6) est une pompe péristaltique.

10. Dispositif selon l'une quelconque des revendications précédentes, dans lequel, pour la mise en œuvre de l'opération de préchauffage, le dispositif de commande (15) est conçu afin d'activer brièvement un courant d'eau chaude traversant l'unité d'infusion (1) et la conduite de sortie (5) avant que l'unité d'infusion (1) soit remplie avec du café moulu.

11. Dispositif selon l'une quelconque des revendications précédentes, dans lequel l'unité d'infusion (1) est pourvue d'un chauffage (20) et le dispositif de commande (15) est conçu afin d'activer un courant d'eau chaude traversant la conduite de sortie (5) par le biais d'une soupape (17) pour la mise en œuvre du processus de préchauffage.
